# EUROPEAN PATENT APPLICATION

(11) **EP 1 803 792 A1**
(43) Date of publication of application: **04.07.2007**
(21) Application number: 05793470.5
(22) Date of filing: 17.10.2005
(51) Int. Cl.: C10M 133/16, C10M 177/00, F16C 33/10, F16C 33/66, C09K 3/00, C10N 20/00, C10N 30/00, C10N 30/06, C10N 40/02, C10N 50/10, C10N 70/00

(54) **HEAT REVERSIBLE GEL-LIKE LUBRICATING COMPOSITION, PROCESS FOR PRODUCING THE SAME, AND BEARING LUBRICANT AND BEARING SYSTEM USING SAID COMPOSITION**

(30) Priority: 20.10.2004 JP 2004305167
(71) Applicant: Porite Corporation, Saitama-shi Saitama 3310823 (JP); JAPAN ENERGY CORPORATION, Tokyo 105-0001 (JP)
(72) Inventor: TAKEZAKI, Yoji c/o Porite Corporation, Saitama-shi,Saitama 3310823 (JP); ASARI, Masaya c/o Porite Corporation, Saitama-shi Saitama 3310823 (JP); YASUTOMI, Seijiro c/o Japan Energy Corporation, Toda-shi, Saitama 3350026 (JP); SHITARA, Yuji c/o Japan Energy Corporation, Toda-shi, Saitama 3350026 (JP)
(74) Representative: Forstmeyer, Dietmar
(86) International application number: PCT/JP2005/019035
(87) International publication number: WO 2006/051671

(57) **Abstract**

This invention provides a heat reversible gel-like lubricating composition having such properties that, in a service bulk temperature region, the composition is in a semi-solid gel as like as grease, but on the other hand, in a local high-temperature region such as a sliding and contacting portion, the composition is homogeneously melted, is free from a drawback of grease, ie., the precipitation of foreign substances, exhibit excellent low frictional characteristics unrealizable by grease, and exhibits significant energy saving properties.

The heat reversible gel-like lubricating composition of the present invention comprises a mineral oil and/or synthetic liquid base oil for lubricant and a bisamide and/or a monoamide, and has heat reversible gel properties. Preferably, the heat reversible gel-like lubricating composition contains a triamide and further contains, based on 100 parts by weight of the liquid base oil for lubricant, 0.01 to 500 parts by weight in total of a bisamide and a monoamide and 0.05 to 10 parts by weight of a friction modifier.

## Description

### TECHNICAL FIELD

The present invention relates to a heat reversible gel-like lubricaing composition, a bearing lubricant, and a bearing system using the heat reversible gel-like lubricaing composition and the bearing lubricant. In particular, the present invention relates to a heat reversible gel-like lubricaing composition which, when used in a sintered metal oil-impregnated bearing or rolling bearing, scarcely cause leakage or separation of oil, can reconstruct the gel structure even after being repeatedly subjected to heating and cooling stresses during use, can adjust gel properties such as flow characteristics and consistency according to the application over a wide range, and exhibits friction characteristics with a significantly improved low coefficient of friction as compared with conventional lubricants.

### BACKGROUND ART

Lubricants are classified to lubricating oil which mainly comprises a base oil such as a mineral oil or a synthetic oil and is liquid at room temperature, and grease in a semi-solid gel form in which a puffing agent such as a metal soap and urea is dispersed. These lubricants have different advantages and disadvantages respectively, and are used depending on the use conditions, circumstance, and application.

In recent years, machines have been becoming increasingly sophisticated, effective, high-speed, compact, and long-lived. Thus, lubricating conditions for sliding portions of an oil-impregnated bearing and the like used in such machines in particular are becoming stricter, and higher performance of lubricants is being required. In order to maintain stable sliding properties and lubricating properties of a lubricant for a long period of time, poor lubricity due to wasting, loss, and deterioration of the lubricant must be reduced as much as possible. Since a complex electronic control circuit is often incorporated in these machines, system contamination due to leakage of lubricant or a volatile component must also be prevented as much as possible. Liquid lubricating oil usually tends to spread due to the high wetting properties thereof, and a measure for preventing splashing and spreading of the oil, e.g., an appropriate oil-repellent treatment on the surface of a system material, is necessary, if required, when the liquid lubricating oil is used in a compact precision instrument such as a camera.

Further, there is a demand to save energy by reducing friction of sliding portions in the instruments described above. It is thought to use a liquid lube base oil with low viscosity as a countermeasure therefor. However, low viscosity not only leads to a higher probability of system contamination and vaporization loss due to oil leakage, but also leads to a higher probability of poor lubricity due to poor capability of forming an oil film in the lubricating portions.
Therefore, there is a limit to the lowering of viscosity.

Accordingly, grease with a semi-solid gel form has been proposed for such an application, for example, a lubricant with which is impregnated an oil-impregnated sintered bearing, and the like, which is evidently excellent in preventing system contamination. However, common grease is a heat-irreversible gel, and therefore, often cannot be used for impregnation treatment even at a high temperature. Even if the grease could be used for impregnation treatment, there is the drawback of precipitation of foreign substances such as fiber bodies produced as residues of puffing agent components having a not negligible size to the clearance of the sliding portion when oil in the grease is lost during the use over a long period of time. Further, there are problems that metal soap grease has usually low heat resistance, and though organic non-soap grease has high heat resistance, the consistency changes and unreacted components such as an alkali metal are deposited during use.

It is proposed that an amino acid gelling agent is used for a contact grease (see JP-A-63-221198). However, since optical activity is required for a non-aqueous gelling agent, only limited types of gelling agents are put into practical use in the view of ease of purification and cost (see "Hyomen (Surface)" by Kenji HANABUSA, et al., Vol. 36, No. 6, pp. 291-301, 2003). A triamide compound, which is one of a limited number of non-aqueous gelling agents, is lower in lubricating performance as compared with a bisamide compound or a monoamide compound. Therefore, a heat reversible gel-like lubricant with sufficiently low friction characteristics cannot be prepared by merely adjusting the type and concentration of a triamide compound.
Further, a lubricating oil composition in which a wax component such as paraffin wax and bees wax is blended to a liquid lube base oil is disclosed (see JP-A-10-246230, for example). However, although oil leakage may be prevented by blending wax components, performance of the composition is insufficient in terms of friction characteristics.

### DISCLOSURE OF THE INVENTION

### PROBLEMS TO BE RESOLVED BY THE INVENTION

The present invention solves the above-mentioned problems and an object of the present invention is to provide a heat reversible gel-like lubricaing composition which is a semi-solid gel like grease in an operating bulk temperature region, but is homogeneously melted in a local high-temperature region such as a sliding and contacting portion, is free from the problem of precipitation of foreign substances which is an inherent week point of grease, exhibits remarkable low-friction characteristics unrealizable by grease, and possesses excellent energy saving performance.

### MEANS FOR SOLVING THE PROBLEMS

The present inventors conceived an idea of solving the above-mentioned problem at once by blending a specific amount of a bisamide and/or a monoamide having a melting point in a range from several tens to several hundreds degrees Celsius (°C) to a base oil. That is, a grease-like semi-solid gel can be prepared by the blending of such a bisamide and/or a monoamide, the gel can prevent leakage or splashing of oil. Therefore, the bisamide and/or monoamide are melted in sliding portion at the temperature higher than the melting point thereof, the gel is free from the drawback of grease to precipitate forign substances, and exhibits excellent low friction characteristics possessed by a bisamide and a monoamide. As a result of extensive studies based on this concept, the inventors have confirmed that the expected effect can be achieved and completed the present invention.

The present invention is a heat reversible gel-like lubricaing composition comprising a mineral and/or synthetic liquid base oil for lubricant and a bisamide and/or a monoamide. Furthermore, the present invention is to provide a method for preparing a heat reversible gel-like lubricaing composition comprising blending a bisamide and/or a monoamide capable of forming a heat reversible gel to a mineral and/or synthetic liquid base oil for lubricant.
In the heat reversible gel-like lubricaing composition and the method for preparing the same of the present invention, it is preferable to blend a triamide, more preferably to blend the bisamide and/or the monoamide in an amount of 0.01 to 500 parts by weight in total per 100 parts by weight of the liquid base oil for lubricant, and still more preferably to blend a friction modifier in an amount of 0.05 to 10 parts by weight per 100 parts by weight of the liquid base oil for lubricant.

Further, the present invention is a bearing lubricant comprising the heat reversible gel-like lubricaing composition and a bearing lubricant system using the bearing lubricant, which are particularly preferably applied in an oil-impregnated bearing system or a rolling bearing system.
Still further, the present invention is a method for producing a bearing system comprising a step of heating the bearing lubricant together with an oil-impregnated bearing. In this case, the oil-impregnated bearing before the heating step does not usually contain an oily component such as a lubricant, but may contain an oily component.

### EFFECT OF THE INVENTION

The heat reversible gel-like lubricaing composition of the present invention is a semi-solid gel same as grease at a bulk temperature in mechanical elements, as well as at room temperature. However, at a local high-temperature region of a sliding and contacting portion, amides are homogeneously dissolved, the composition exhibits a lubricating performance as a liquid base oil for lubricant having low friction characteristics without precipitation of foreign substances, which is an inevitable defect of grease. Thus, the composition has an advantage of being substantially free from lubricating trouble caused by precipitation of foreign substances. Furthermore, the exellent low friction characteristics unrealizable by grease can be realised by interaction between a bisamide and/or a monoamide, and a liquid base oil for lubricant, resulting in significant energy saving.

### BRIEF DESCRIPTION OF THE DRAWINGS

Fig.1 is a diagram showing the relationship between the blend amount of an amide and 1/4 consistency.
Fig.2 is a cross-sectional view of the main portion of an oil-impregnated sintered bearing in which the bearing lubricant comprising the heat reversible gel-like lubricaing composition of the present invention can be suitably used. Fig.2 also shows an example of a supply mechanism of the gel-like lubricaing composition.
Fig.3 is a cross-sectional view of the main portion of a rolling bearing in which the bearing lubricant comprising the heat reversible gel-like lubricaing composition of the present invention can be suitably used.
Fig.4 is a cross-sectional view of a main portion of an example of a bearing system in which the heat reversible gel-like lubricaing composition of the present invention is placed outside of an oil-impregnated bearing for the purpose of giving a function for retaining oil in order to prevent pollution due to oil splashing.

### EXPLANATION OF NUMERALS

1. Lubricating oil supply mechanism (gel-like lubricaing composition)
2. Oil-impregnated bearing
3. Shaft
4. Spacer
5. Thrust washer
6. Housing 1
7. Housing 2
8. Leaf spring
9. Bearing ring (outer ring)
10. Bearing ring (inner ring)
11. Holder
12. Rolling element (ball and/or roller)
13. Rotor
14. Oil retention mechanism (gel-like lubricaing composition)
15. Housing
16. Thrust plate
17. Plate supporter

### BEST MODE FOR CARRYING OUT THE INVENTION

The heat reversible gel-like lubricaing composition of the present invention can be obtained by blending a bisamide and/or a monoamide to a liquid base oil for lubricant, optionally blending a triamide and a friction modifier, further blending additives such as an antioxidant and a rust preventive, stirring the mixture at a temperature more than the highest melting point of the amides (bisamide, monoamide, and triamide to be added), preferably at a temperature 2 to 20°C higher, more preferably about 5 to 10°C higher, than the highest melting point of the amides, and allowing the mixture to cool after confirming homogeneous dissolution.
"Heat reversible" is defined in the present invention as the property of semipermanently repeating a change in the state depending upon environmental thermal energy (liquefaction by temperature rising and gelation by temperature lowering) and, specifically, properties of being in a gel-like state in a bulk temperature region of a machine used (from room temperature to several tens °C, for example, 0 to 80°C) and being in a liquid state in only a local high-temperature region (for example, 100 to 200°C) in a machine slide portion (boundary lubrication mode).
The composition having gel-like lubricating properties of the present invention must have hardness (consistency) according to application and a mechanical element or machine which is used. The hardness (consistency) can be set with a wide range by adjusting the blending amount of an amide. Specifically, blending of a bisamide and/or a monoamide in an amount of from 0.01 to 500 parts by weight in total per 100 parts by weight of the liquid base oil for lubricant is preferable.

As the liquid base oil for lubricant in the present invention, any oils commonly used as a lubricating oil, including a mineral oil, a synthetic oil, or a mixture thereof, can be used. As properties of the lubricating oil, a lubricating oil having a kinematic viscosity at 40°C of 3 to 500 mm²/s is preferably used. A lubricating oil having a kinematic viscosity at 40°C of 8 to 100 mm²/s is more preferable. The viscosity index of the lubricating oil is 90 or more, preferably from 95 to 250, the pour point is less than -10°C, preferably from -15 to -70°C, and the flash point is preferably 150°C or more. In the case in which the liquid base oil for lubricant is a mixture, the mixture can be used even though the properties of oils before mixing may be outside the range described above, except for the flash point, inasmuch as the properties of the mixture are within the range described above.

Mineral oil-type base oils for lubricant are generally prepared by distilling crude oil under atmospheric pressure, optionally further distilling the atmospheric residual oil under reduced pressure, refining the resulting distillate oil by various refining processes to obtain a lubricating oil fraction. The fraction is used as a base oil, as it is, or a base oil is prepared by blending various additives to the fraction. xamples of the above refining processes include hydrotreating, solvent extraction, solvent dewaxing, hydrodewaxing, sulfuric acid washing, and a clay treatment. A mineral oil-type base oil for lubricant suitable for the present invention can be obtained by combining these processes in an appropriate order and submitting thereto. A mixture of two or more refined oils having different properties obtained by processing different crude oils or different distillate oils in combination with different processes, or in different orders may also be used as a suitable base oil.

Synthetic oil-type lubricating oils include a poly-α-olefin (PAO), a fatty acid ester, a low-molecular-weight ethylene-α-olefin copolymer, a silicone oil, a fluorinated oil, an alkyl naphthalene, and the like having high heat resistance, for example. These may be used alone or in combination as the base oil. Further, the base oil may be used as it is or prepared by blending various additives. Mineral oil-type lubricating oils and synthetic oil-type lubricating oils can be used alone individually or by mixing both at an appropriate ratio.

The bisamide in the present invention may be a acid amide of diamine or a acid amide of diacid. The bisamide preferably used in the present invention has a melting point of 80 to 180°C, more preferably 100 to 170°C, and a molecular weight of 242 to 932, more preferably 298 to 876.

A suitable acid amide of diamine is shown by the following formula.

R¹-CO-NH-A¹-NH-CO-R²

(wherein R¹ and R² are independently a saturated or unsaturated chain hydrocarbon group with a carbon number of 5 to 25. A¹ is an alkylene group, a phenylene group, or an alkyl phenylene group with a carbon number of 1 to 10, or a bivalent hydrocarbon group with a carbon number of 1 to 10 in combination therewith.)
A suitable acid amide of diacid is shown by the following formula.

R³-NH-CO-A²-CO-NH-R⁴

(wherein R³ and R⁴ are independently a saturated or unsaturated chain hydrocarbon group with a carbon number of 5 to 25. A² is an alkylene group, a phenylene group, or an alkyl phenylene group with a carbon number of 1 to 10, or a bivalent hydrocarbon group with a carbon number of 1 to 10 in combination therewith.)

The acid amide of diamine includes preferably ethylene bisstearic acid amide, ethylene bisisostearic acid amide, ethylene bisoleic acid amide, methylene bislauric acid amide, hexamethylene bisoleic acid amide, hexamethylene bishydroxy stearic acid amide, m-xylylene bisstearic acid amide, and the like. The acid amide of diacid includes preferably N,N'-distearyl sebacic acid amide, and the like. Of these, ethylene bisstearic acid amide is particularly preferable.

The monoamide preferably used in the present invention is shown by the following formula.

R⁵-CO-NH-R⁶

(wherein R⁵ is a saturated or unsaturated chain hydrocarbon group with a carbon number of 5 to 25 and R⁶ is a hydrogen atom or a saturated or unsaturated chain hydrocarbon group with a carbon number of 5 to 25.)
Specifically, the monoamide may be a saturated fatty acid amide such as lauric acid amide, palmitic acid amide, stearic acid amide, behenic acid amide, hydroxystearic acid amide, and the like, an unsaturated fatty acid amide such as oleic acid amide and erucic acid amide, and the like, and a substituted amide of a long-chain fatty acid and a long-chain amine (monoamide of the above formula in which R⁶ is not hydrogen) such as a substituted amide of stearyl stearic acid amide and oleyl oleic acid amide. However, since the substituted amide is used at a high temperature, the substituted amide which has a molecular weight close to that of a bisamide is preferable from the viewpoint of being used at a high temparature. The monoamide preferably used has a melting point of 30 to 130°C, more preferably 50 to 120°C, and the molecular weight of 115 to 745, more preferably 157 to 689.

The blending amount of the bisamide and/or monoamide to the liquid base oil for lubricant is preferably in a range of 0.01 to 500 parts by weight, particularly preferably in a range of 0.05 to 250 parts by weight in total per 100 parts by weight of the liquid base oil for lubricant. A gel state and sufficiently low friction characteristics can be obtained by adjusting the blending amount of the bisamide and/or monoamide to 0.01 parts by weight or more. The liquid base oil for lubricant can be retained in the sliding portion in an amount sufficient to prevent an increase of friction by adjusting the amount of bisamide and/or monoamide to 500 parts by weight or less.

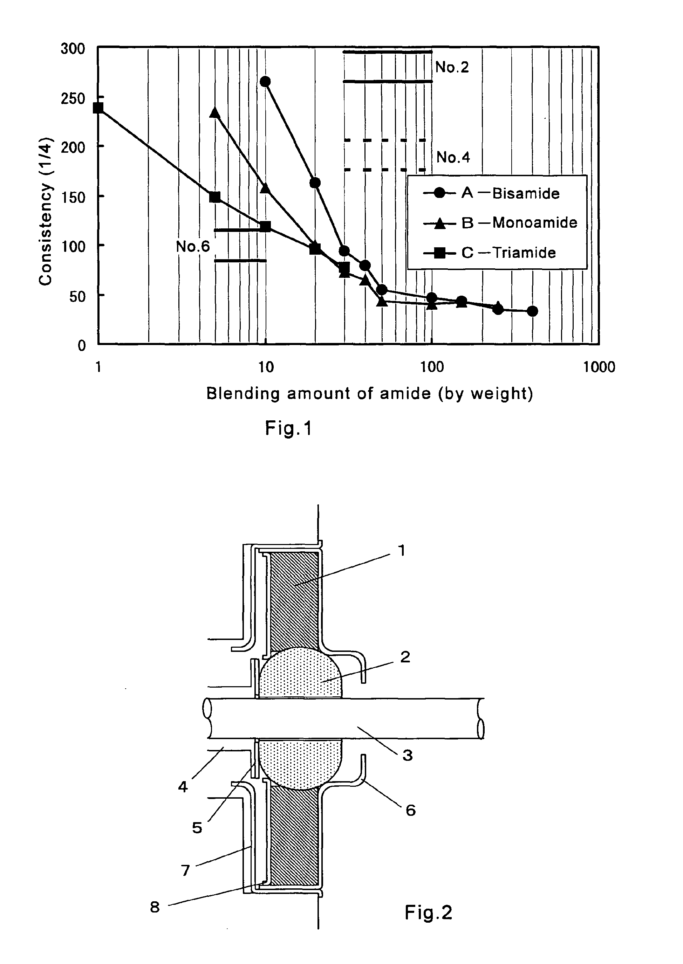

There are cases where the hardness of the gel is insufficient when the blending amount of the bisamide and/or monoamide is in a low concentration range of 0.05 to 5 parts by weight as shown in Fig.1, depending on the type of the bisamide and/or monoamide.
In such cases, adding a triamide as necessary is helpful. In Fig.1, ethylene bisstearic acid amide, stearic acid amide, and N-lauroyl-L-glutamic acid-α,γ-di-n-butylamide used in Examples are used as a parameter bisamide, monoamide, and triamide, respectively. The blending amounts of each amide are shown by parts by weight per 100 parts by weight of the liquid base oil for lubricant. Nos. 2, 4, and 6 in Fig.1 indicate each consistency number stipulated in JIS K2220 "Grease" and simply show the range of each consistency number.

The triamide preferably used in the present invention is shown by the following formula.

R⁷-M-A³-CH(A⁴-M-R⁸)-A⁵-M-R⁹

(wherein R⁷, R⁸ and R⁹ are independently saturated or unsaturated chain hydrocarbon groups with a carbon number of 2 to 25.
M is an amide group (-CO-NH-) and A³, A⁴ and A⁵ are independently single bonds or alkylene group having a carbon number of 5 or less.)
Specifically, N-acylamino acid diamide compounds are preferable. The N-acyl group of the compound is preferably a linear or branched and saturated or unsaturated aliphatic acyl group or an aromatic acyl group with a carbon number of 1 to 30, and specifically preferably a caproyl group, a capryroyl group, a lauroyl group, a miristoyl group, or a stearoyl group. The amino acid for the compound is preferably originated from aspartic acid or glutamic acid. The amine of the amide group is preferably a linear or branched and saturated or unsaturated aliphatic amine, aromatic amine, or alicyclic amine with a carbon number of 1 to 30, and more preferably butylamine, octylamine, laurylamine, isostearylamine, stearylamine cyclohexylamine, and benzylamine. N-lauroyl-L-glutamic acid-α,γ-di-n-butylamide is particularly preferable.

Though the blending amount of the triamide may vary depending on the base oil used, it is preferable to add 0.01 to 30 parts by weight of the triamide, more preferably 0.05 to 30 parts by weight, and still more preferably more than 0.1 parts by weight per 100 parts by weight of the liquid base oil for lubricant. If the blending amount of the triamide is 0.01 parts or more by weight, preferably 0.05 parts or more by weight, the gel structure can be developed sufficiently, and if the amount of the triamide is 30 parts or less by weight, the gel can be maintained suitable hardness for use and costs can advantageously be reduced.

Addition of 0.05 to 10 parts by weight of a friction modifier, preferably an oil soluble friction modifier, per 100 parts by weight of the liquid base oil for lubricant used in the present invention is particularly preferable in significantly reducing the period (running-in period) of time required for conditioning the heat reversible gel-like lubricaing composition. As the oil-soluble friction modifier, an ashless friction modifier such as an ester ashless friction modifier, an ether ashless friction modifier, a polyol ashless friction modifier, an imidazole ashless friction modifier, and an amine ashless friction modifier, for example, monoester of a long-chain fatty acid, an ester of a higher alcohol and the compound thereof, and an aliphatic amine ester and an aliphatic amide ester, and the like, and a metal friction modifier such as a molybdenum dialkyldithiocarbamate, or the like may be used individually or in combination.

It is needless to say that commonly-used additives for lubricants such as an antioxidant, an anti-wear additive, an anti-rust additive, a pour-point depressant, a metal deactivator, a defoaming agent, and an adhesive agent for providing viscosity may be added to the lubricaing composition of the present invention as necessary.

The lubricaing composition of the present invention possesses excellent friction characteristics (a low friction coefficient), can prevent greasy dirt due to oil leakage, and enables reconstruction of the gel structure even after repeated stresses of heating and cooling during use and non-use. Therefore, the lubricaing composition of the present invention can be suitably used as a bearing lubricant in a lubrication system, for example, the bearings mentioned below. An oil-impregnated bearing and a rolling bearing can be given as examples of the bearings.

The oil-impregnated sintered bearing indicated by numeral 2 in Fig.2, is Produced by impregnating with the liquid lubricant oil by vacuum impregnation or the like into a porous sintered metal which is made from a powder of a metal such as copper, bronze, brass, iron, and zinc by mixing, molding, sintering, and sizing, and generally has 5 to 30 vol% voids. By impregnating the oil-impregnated sintered bearing with the lubricaing composition of the present invention by the method mentioned below, lower friction as compared to the case when a conventional liquid lubricating oil is impregnated can be realized, and oil leakage does not occur and the greasy dirt to the surrounding area can be prevented. A gel-like lubricaing composition needs to melt in a liquid state by heating to a temperature of 10°C higher than the melting point of the amide blended therein, and impregnate into a porous sintered metal material by vacuum impregnation or the like. In the case where excessive lubricating oil adhered on the surrounding area of the oil-impregnated sintered bearing should be removed, a centrifugal deoil process that the excessive lubricating oil is removed by utilizing centrifugal force is carried out by putting the oil-impregnated sintered bearing in a basket, and rotating the bearing together with the basket. In the case where a gel-like lubricaing composition is used, this process needs to be done in a state where the surrounding temperature is kept higher than the melting point of the amide contained in the lubricaing composition so that the gel-like lubricaing composition is melted. The processes described above other than the vacuum impregnation are preferably carried out under the atmosphere of inert gas such as nitrogen to prevent the lubricating oil and the bearing metal from oxidation deterioration due to a high temperature.
In addition to the oil-impregnated bearing made of metal as mentioned above, a material having porosity capable of being impregnated with the heat reversible gel-like lubricaing composition of the present invention by any means such as heating and maintaining the lubricaing composition, such as a plastic resin, a ceramic, a fiber material such as wood or cork, or a composite material made from two or more of these materials can be used.

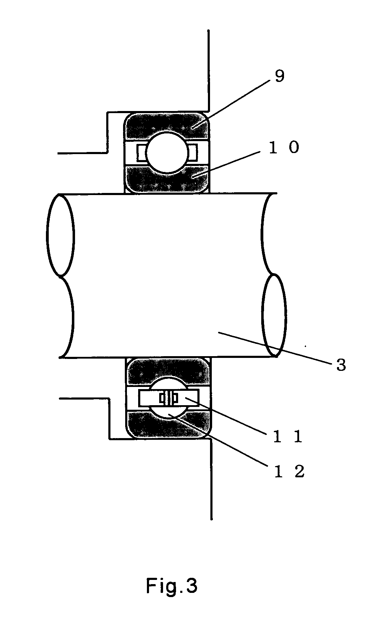

As shown in Fig.3, a rolling bearing is fabricated from two bearing rings (an inner ring 10 and an outer ring 9), rolling elements 12 (balls or rollers), and a holder 11, and the rolling elements 12 disposed between the inner ring 10 and outer ring 9 have a certain distance from the other by the holder 11 so as to prevent from coming into contact each other. A rolling bearing has a rolling mechanism and is largely classified into radial bearing and thrust bearing. A rolling bearing is generally filled with a liquid lubricating oil or a grease so that the bearing is smoothly lubricated. The heat reversible gel-like lubricaing composition of the present invention has the same lubricating properties as these liquid lubricating oils or greases, and can derive better bearing performance due to the excellent friction characteristics and lubricating performance. As the application method, a method of filling in the bearing with the gel-like lubricaing composition in the same manner as a grease, a method of heating the gel-like lubricaing composition to liquefy the composition and charging the bearing with the heated liquefied composition, followed by cooling to form a gel, and the like can be given. When the holder 11 is made of a porous material, the bearing is used by impregnating the holder 11 with the gel-like lubricaing composition.

Furthermore, systems utilizing the following properties possessed by the gel-like lubricaing composition of the present invention are included in the scope of the present invention. The gel-like lubricaing composition of the present invention is a gel of semi-solid state, and the liquid base oil for lubricant is held in an amide compound which forms a three-dimensional network structure. Microscopically, the liquid base oil for lubricant is freely moving inside the network structure. This indicates that, for example, when the gel-like lubricaing composition comes in contact with small pores of the porous material, the liquid base oil for lubricant can move from the gel to the small gaps by capillary phenomenon, or when an excessive amount of the liquid base oil for lubricant is present in the system, on the other hand, the gel functions as a capillary of the three-dimensional structure and incorporates the excessive liquid base oil for lubricant therein.

As examples of systems utilizing such characteristics of the gel-like lubricaing composition of the present invention, for example, a system of disposing the gel-like lubricaing composition outside the oil-impregnated bearing in order to supply the lubricating oil to the oil-impregnated bearing, or a system of disposing the gel-like lubricaing composition for the purpose of oil-retaining function in order to prevent the system from being polluted by the liquid base oil for lubricant by collecting the base oil leaked from the bearing can be given. Currently, felt (nonwoven fabric) or cellulose fibers with high oil absorptivity impregnated with liquid lubricating oil are used as a mechanism for supplying oil to an oil-impregnated bearing. Such a mechanism has problems such as insufficient impregnated oil content, difficulty in controlling the impregnated oil content, requirement of a time-consuming effort for impregnating the oil, and lubrication failure such as seizure due to fibrous foreign substances came into the bearing clearance. However, if the gel-like lubricaing composition of the present invention is used, the impregnated oil content can be appropriately adjusted and the composition can be easily filled in the bearing by heating and liquefying the composition. In addition, since amides are non-fibrous materials and have low friction characteristics, the amides have no problems even if they come into clearances. Thus, the composition can be used as a means for solving the problems in the prior arts. Specifically, as shown in Fig.2, if the gel-like lubricaing composition of the present invention is provided at the place shown as an oil supplying mechanism 1 located outside of an oil-impregnated bearing 2, the lube component can be automatically supplied from the composition when the lube component in the oil-impregnated bearing 2 decreases. Conversely, if the lube component leaks from the oil-impregnated bearing 2, the leaked oil is automatically collected in the lubricaing composition.

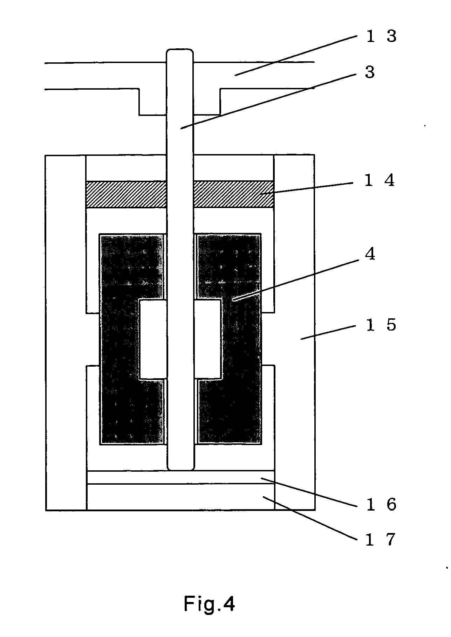

Moreover, as a measure for preventing greasy dirt due to splashing of a liquid lubricating oil, and a decrease in the service life of a bearing resulting from a reduced amount of the oil due to splashing and vaporization, current bearing systems such as an oil-impregnated bearing have an oil seal mechanism in the housing of the bearing or are provided with an oil-repellent treatment. As an oil seal, a packing made of rubber, a metal washer, or the like are widely used. In the case of the packing, the efficiency is significantly reduced at a high speed rotation by slide resistance generated when the packing comes in contact with the axis. In the case of the metal washer, since a space must be provided between the washer and the axis to avoid their direct contact, it is impossible to completely seal the bearing housing. The same problem occurs in the case where the washer is made of a material other than a metal such as a resin. A method of providing an oil-repellent treatment has problems such as a fluctuation in the oil-repelling effect and requirement of a time-consuming effort for the oil-repellent treatment. A noncontact bearing system in which oil is prevented from splashing by using a magnetic fluid or the like has a problem of expensive cost, although high-speed rotation performance is satisfied. However, by utilizing the oil-retaining effect of the gel-like lubricaing composition of the present invention, that is, for example, by providing the gel-like lubricaing composition of the present invention in a housing 15 as an oil retaintion mechanism 14, as shown in Fig.4, it is possible to collect excessive liquid lubricating oil splashed from an oil-impregnated bearing 4, thereby preventing the system from being polluted with oil. In addition, since the gel-like lubricaing composition possesses low friction characteristics, the composition does not affect the performance of the bearing rotating at high-speed even if coming in contact with the axis, thereby ensuring complete sealing of the bearing housing and complete prevention of vaporization of the lubricating oil. Thus, all of the problems in the prior arts can be solved.

### EXAMPLES

The present invention will now be described in detail by way of examples, however, the present invention is not limited to the examples.

The following liquid base oils for lubricant, amides, waxes, oil-soluble friction modifier, and puffing agents were blended at the proportions shown in Tables 2, 3, and 4 to prepare the lubricaing compositions of the Examples and the Comparative Examples.

### 1. Liquid base oil for lubricant

The four liquid base oils for lubricant having the properties as shown in Table 1 were used. Base oil A and base oil D indicated as "PAO" are commercially-available poly-α-olefins, and these viscosity grades are respectively VG32 and VG68. Base oil B is a mineral oil with VG46. The fatty acid ester of base oil C is an ester of a polyhydric alcohol with a neopentyl structure (neopentyl glycol) and a fatty acid (isostearic acid). These liquid base oils for lubricant contain previously predetermined amounts of additives such as an antioxidant, and an anti-wear additive, and have basic properties (antioxidant properties, antiwear properties, etc.) as lubricating oils.

**[Table 1]**

| | | Base oil A | Base oil B | Base oil C | Base oil D |
|---|---|---|---|---|---|
| Type of base oil | | PAO | Mineral oil | Fatty acid ester | PAO |
| Kinematic Viscosity mm²/s | (40°C) | 29.5 | 43.6 | 45.9 | 66.0 |
| | (100°C) | 5.68 | 7.31 | 8.10 | 10.0 |
| Viscosity index | | 136 | 131 | 150 | 137 |
| Pour point °C | | -60.0 | -15.0 | -47.5 | -45.0 |

### 2. Amide

A-Bisamide: Ethylene bisstearic acid amide [mp: 145°C, molecular weight: 592]
B-Monoamide: Stearic acid amide [mp: 101°C, molecular weight: 283]
C-Triamide: N-lauroyl-L-glutamic acid-α,γ-di-n-butylamide [mp: 152°C, molecular weight: 440]
D-Monoamide: N-stearyl stearic acid amide [mp: 95°C, molecular weight: 535]

### 3. Wax (Comparative Example)

Paraffin wax [mp: 95°C]
Polyethylene wax [mp: 104°C]

### 4. Friction modifier

Ester-based friction modifier [Irgalube F10A manufactured by Ciba Specialty Chemicals, Corp.]

### 5. Puffing agent

Lithium soap: 12 hydroxy lithium stearate was used as a soap puffing agent.
Diurea: A mixture of an aliphatic diurea compound and an aromatic diurea compound was used as a non-soap puffing agent.

### 6. Test method

The liquid base oils for lubricant, amides, waxes, and the like were blended at the proportions shown in Tables 2, 3, and 4, and the mixture was heated to a temperature above the melting points of the components, specifically to a temperature 10°C higher than the melting point of the blended amide having the highest melting point. The mixture was stirred until homogeneous dissolution was confirmed, and then cooled to room temperature to obtain lubricaing compositions of Examples 1 to 16 and Comparative Examples 1 to 5. The prepared lubricaing compositions were subjected to tests for evaluating heat reversibility, state observation, anti-dripping properties, and lubricity according to the methods described below, and the properties as gel-like lubricants were compared with these of a non-gel-like lubricating oil (a liquid containing no amide) of composition of Comparative Example 1, semi-solid gel to which a wax such as paraffin wax was added (Comparative Examples 1 and 2), commercially-available Li-containing grease No.2 (Reference Example), and Li-containing grease (Comparative Example 4) and urea grease (Comparative Example 5) adjusted using the same liquid base oil for lubricant as the Examples. In addition, oil-impregnated sintered bronze bearings were impregnated with the compositions of the Examples and the Comparative Examples to measure and compare friction characteristics.

### (Heat reversibility)

100 g of the lubricaing compositions prepared in the above-mentioned procedure were added to 200 ml glass beakers and allowed to stand in a thermoregulated bath at 150°C for one hour to homogeneously dissolve, followed by cooling to room temperature. The appearances before and after heating were observed. These samples were determined to be "Good", if a same homogeneous gel-like state as the state before heating was observed, and to be "Bad", if layer separation or unhomogeneous gel-like state was observed.

### (State observation)

One day after the above heat reversibility test, the appearance of the lubricaing compositions of the Examples and the Comparative Examples were visually observed to determine whether or not the homogeneous gel-like state was maintained (occurrence of layer separation, amide precipitation, etc.).

### (Anti-dripping properties)

About 1 ml of sample oil (lubricaing compositions of the Examples and the Comparative Examples) was dropped on a clean glass plate with an inclination of 15 degree using a pipette at room temperature to observe flowability of the drop. These samples were determined to be "Bad", if the drops flowed down on the inclined glass plate immediately after dropping, and to be "Good", if the drops stayed on the plate as immovable drops which did not flow.

### (Consistency)

Unmixing consistency was measured according to JIS K2220 using a 1/4 consistency tester.

### (Lubricity)

### Wear resistance (ball wear scar diameter)

The Shell Four-Ball Wear Test (ASTM D4172) was conducted for measuring wear resistance. The Test was conducted under the conditions of speed of 1,200 rpm, load of 40 kgf/cm², and tempareture of 50°C for 60 minutes to measure ball wear scar diameter (mm).

### Friction characteristics (coefficient of friction)

Friction characteristics were determined using SRV test with ball-on-disc configuration by measuring a coefficient of friction after 15 minutes from start of the test conducted under conditions of a load of 100N, a frequency of 50Hz, an amplitude of 1.5 mm, and a temperature of 40°C. The test machine used for the SRV test conformed to ASTM D5706 and the material of the ball and disc was SUJ-2.

### (Impregnation to oil-impregnated sintered bearing and friction characteristics)

An oil-impregnated sintered bronze bearing (internal diameter: 4.007mm) was impregnated under a vacuum with the lubricaing compositions of the Examples and the Comparative Examples melted by heating at about 150°C. The impregnated oil content was about 20 vol%. A steel shaft (external diameter: 3.994 mm) was positioned in the impregnated bearing material and a slide test was carried out by applying a load of 3.7 kgf/cm² from above at speeds of 100 rpm and 4,000 rpm to evaluated the friction characteristics by the coefficient of friction. The experiment was conducted three times for each of the above rotation speeds at room temperature. The mean value of the coefficients of friction at steady states was recorded. The period of time required for the friction coefficient at 100 rpm to become steady-state (running-in period) was also measured.

### 6. Results

The amounts of the components in the lubricaing compositions of the Examples and the Comparative Examples and the evaluation results thereof are shown in Tables 2, 3, and 4.

**[Table 2]**

| | Example | | | | | | | | Comparative Example 1 |
|---|---|---|---|---|---|---|---|---|---|
| | 1 | 2 | 3 | 4 | 5 | 6 | 7 | 8 | |
| Base oil A | 100 | 100 | 100 | 100 | 100 | 100 | - | - | 100 |
| Base oil B | - | - | - | - | - | - | 100 | - | - |
| Base oil C | - | - | - | - | - | - | - | 100 | - |
| A-Bisamide | 0.1 | 0.5 | 1.0 | 5.0 | - | - | 1.0 | 1.0 | - |
| B-Monoamide | - | - | - | - | 1.0 | 5.0 | - | - | - |
| C-triamide | 0.1 | 0.5 | - | - | - | - | - | - | - |
| Heat reversibility | Good | Good | Good | Good | Good | Good | Good | Good | - |
| State (observation)* | H-gel | H-gel | H-gel | H-gel | H-gel | H-gel | H-gel | H-gel | Liquid |
| Anti-dripping properties | Good | Good | Good | Good | Good | Good | Good | Good | Bad |
| Wear resistance Ball wear scar deiameter (mm) | 0.41 | - | 0.38 | - | - | - | - | - | 0.48 |
| Friction characteristics (SRV) Coefficient of friction | 0.125 | - | 0.120 | - | - | - | - | - | 0.132 |

| | | | | | | | | | |
|---|---|---|---|---|---|---|---|---|---|
| * H-gel = Homogeneous gel | | | | | | | | | |

**[Table 3]**

| | Example | | | | | | | Comparative Example | | | Reference Example |
|---|---|---|---|---|---|---|---|---|---|---|---|
| | 9 | 10 | 11 | 12 | 13 | 14 | 15 | 1 | 2 | 3 | |
| Base oil A | 100 | 100 | 100 | 100 | 100 | 100 | 100 | 100 | 100 | 100 | - |
| A-Bisamide | 20 | 66.7 | 150 | 250 | - | - | 40 | - | - | - | - |
| B-Monoamide | - | - | - | - | 50 | 250 | - | - | - | - | - |
| Ester-type friction conditioner | - | - | - | - | - | - | 5 | - | - | - | - |
| Paraffin wax | - | - | - | - | - | - | - | - | 20 | - | - |
| Polyethylene wax | - | - | - | - | - | - | - | - | - | 20 | - |
| Commercially-available Li grease | - | - | - | - | - | - | - | - | - | - | 100 |
| Heat reversibility | Good | Good | Good | Good | Good | Good | Good | - | Good | Good | Bad |
| State (observation)* | H-gel | H-gel | H-gel | H-gel | H-gel | H-gel | H-gel | Liquid | H-gel | H-gel | H-gel |
| Consistency | 163 | 50 | 43 | 35 | 43 | 38 | 38 | - | 153 | 60 | 273 |
| Impregnation to sintered bearing | Yes | Yes | Yes | Yes | Yes | Yes | Yes | Yes | Yes | Yes | No |
| Bearing friction characteristics | | | | | | | | | | | |
| Coefficient of friction | | | | | | | | | | | |
| @ 100 rpm | 0.023 | 0.005 | 0.025 | 0.027 | 0.006 | 0.028 | 0.004 | 0.094 | 0.039 | 0.105 | - |
| @ 4000 rpm | 0.136 | 0.040 | 0.138 | 0.140 | 0.045 | 0.140 | 0.073 | 0.157 | 0.152 | 0.203 | - |
| Conditioning time (Hr) | 2 | 1 | 3 | 3 | 1 | 3 | 0.5 | 0.5 | 2 | 5≤ | - |

| | | | | | | | | | | | |
|---|---|---|---|---|---|---|---|---|---|---|---|
| * H-gel = Homogeneous gel | | | | | | | | | | | |

**[Table 4]**

| | Example 16 | Comparative Example 4 | Comparative Example 5 |
|---|---|---|---|
| Base oil D | 100 | 100 | 100 |
| D-Monoamide | 10 | - | - |
| Puffing agent | | | |
| Lithium soap | - | 8 | - |
| Diurea | - | - | 12 |
| Consistency (1/4) | 271 | 279 | 284 |
| Friction characteristic | | | |
| Coefficient of friction | 0.100 | 0.105 | 0.110 |
| Fluctuation of coefficient of friction | Small | Medium | Large |
| Wear resistance Ball wear scar diameter (mm) | 0.28 | 0.33 | 0.40 |

The test results of lubricaing compositions Examples 1 to 8 and Comparative Example 1, of which the consistency could not be measured due to the lubricaing composition with soft gel-like state according to the small blending amlount of the amide, are shown in Table 2. In Table 2, Comparative Example 1 is a lubricaing composition consisting only of base oil A. The compositions of Examples 1 to 8 were blended a bisamide and/or a monoamide. A triamide was added to the compositions with a specifically small content of bisamide (Examples 1 and 2). All of the gel-like lubricaing compositions of Examples 1 to 8 prepared by adding amides to a base oil were confirmed to form a homogeneous gel and exhibit heat reversibility due to reheating. Furthermore, these gel-like lubricaing compositions were confirmed to exhibit excellent anti-dripping properties, and be useful for prevention of the oil leakage as compared with the lubricaing consisting only of a base oil (Comparative Example 1). Moreover, their wear resistance and friction characteristics are also excellent as compared with the lubricaing consisting only of a base oil, confirming that the addition of an amide, in particularly, can lower friction.

As examples of gel-like lubricaing compositions having a certain degree of hardness to the extent that consistency can be measured, the compositions of Examples 9 to 16 and Comparative Examples 2 to 5, and a commercially available lithium grease of the Reference Example are shown in Tables 3 and 4. It can be understood from Table 3 that all the gel-like lubricaing compositions of Examples 9 to 15 to which a bisamide and/or a monoamide was added in an amount from 20 parts by weight to the maximum amount of 250 parts by weight per 100 parts by weight of base oil A formed homogeneous gels and exhibited good heat reversibility. The consistency hardened with the increase of the amount of amides blendeded as shown in Fig.1.

The composition of Comparative Example 2 in which 20 parts by weight of paraffin wax was blended and the composition of Comparative Example 3 in which 20 parts by weight of polyethylene wax were blended were also homogeneous and exhibited heat reversibility. A sliding test using a bearing was carried out for the compositions of Examples 9 to 15 and Comparative Example 1 to 3 with which sintered bearings could be vacuum-impregnated. As a result, it can be seen that, as shown in Examples 9 to 15, the coefficient of friction can be significantly reduced in a wide range from a low speed to a high speed by adding an amide, as compared with the case when only a base oil was used (Comparative Example 1). On the other hand, although the composition (Comparative Example 2) in which paraffin wax was added exhibited a coefficient of friction lower than the base oil (Comparative Example 1) in a low speed region and equivalent to the base oil in a high speed region, but both compositions did not exhibit a coefficient of friction lower than these of Examples 9 to 15. In the case of polyethylene wax (Comparative Example 3), thef friction of the composition was higher than the base oil (Comparative Example 1) in a region from a low speed to a high higher than the base oil (Comparative Example 1) in a region from a low speed to a high speed, confirming that the performance was obviously lower than the composition of Comparative Example 2.

In addition, the gel-like lubricaing composition of Example 15 in which a friction modifier was added was confirmed to exhibit a more excellent lubricant performance by a reduced running-in period.
On the other hand, Li-based grease (Reference Example) did not show heat reversibility, with confirming separation of soap components and oil by heating, and could not be homogeneously impregnated in a sintered bearing under a vacuum.

Furthermore, as shown in Table 4, in comparison of Example 16 with Comparative Examples 4 and 5 in which the same liquid base oil for lubricant was used and these consistencys were adjusted to the same level, it can be seen that the gel-like lubricaing composition of Example 16 exhibits not only low and extremely stable friction characteristics with a low fluctuation of the coefficient of friction, but also superior wear resistance as compared with commonly known Li grease and urea grease.

### INDUSTRIAL APPLICABILITY

Since the heat reversible gel-like lubricaing composition of the present invention causes almost no oil-leakage and can reduce friction in sliding portion, the composition can be suitably used as a lubricaing for bearing systems (oil-impregnated bearing, rolling bearing, etc.) of various general machines such as vehicles, precision instruments, and the like. Furthermore, the composition can be used for bearing systems equipped with a means for making use of the oil supply mechanism or oil retention mechanism possessed by a gel-like lubricaing composition.

## Claims

1. A heat reversible gel-like lubricaing composition comprising a mineral and/or synthetic liquid base oil for lubricant and a bisamide and/or a monoamide and having a characteristics of heat reversible gel.

2. The composition according to claim 1, further comprising a triamide.

3. The composition according to claim 1, wherein the amount of the bisamide and/or the monoamide is 0.01 to 500 parts by weight in total per 100 parts by weight of the liquid base oil for lubricant.

4. The composition according to any one of claims 1 to 3, further comprising 0.05 to 10 parts by weight of friction modifier per 100 parts by weight of the liquid base oil for lubricant.

5. A method for preparing a heat reversible gel-like lubricaing composition comprising blending a bisamide and/or a monoamide capable of forming a heat reversible gel to a mineral and/or a synthetic liquid base oil for lubricant.

6. The method according to claim 5, further comprising blending a triamide.

7. The method according to claim 5, wherein the amount of the bisamide and/or the monoamide is 0.01 to 500 parts by weight in total per 100 parts by weight of the liquid base oil for lubricant.

8. The method according to any one of claims 5 to 7, further comprising blending 0.05 to 10 parts by weight of a friction modifier per 100 parts by weight of the liquid base oil for lubricant.

9. A lubricant for bearings comprising the heat reversible gel-like lubricaing composition according to any one of claims 5 to 7.

10. The lubricant for bearings according to claim 9, wherein the lubricant is used for an oil-impregnated bearing.

11. The lubricant for bearings according to claim 9, wherein the lubricant is used for a rolling bearing.

12. A bearing system using the lubricant for bearings according to any one of claims 9 to 11.

13. A method for producing a bearing system comprising a step of heating the lubricant for bearings according to claim 9 together with an oil-impregnated bearing.
